# EUROPEAN PATENT SPECIFICATION

(11) **EP 2 624 027 B1**
(45) Date of publication and mention of the grant of the patent: **29.06.2016**
(21) Application number: 12153327.7
(22) Date of filing: 31.01.2012
(51) Int. Cl.: F21S 8/10, F21V 8/00, G02B 6/00

(54) **LED Light**
LED-Leuchte
Éclairage à DEL

(43) Date of publication of application: 07.08.2013
(73) Proprietor: Hella Lighting Finland Oy, 24280 Salo (FI)
(72) Inventor: Mäkiranta, Antti, 24280 Salo (FI)
(74) Representative: Lohr, Georg

(56) References cited:
- DE-A1-102008 021 290
- DE-A1-102008 061 716
- DE-A1-102009 027 792
- US-A1- 2002 136 027
- US-A1- 2004 012 976
- US-A1- 2006 291 183
- US-A1- 2010 027 286

## Description

### Field of the invention

The invention relates to a LED light with a reflector and at least one light guide. The invention relates as well to the light guide and to a method for providing light to branches of a light guide.

### Description of the related art

DE 10 2010 016 633 A1 relates to a vehicle light with a light guide. The light guide has three branches ending in a common light entrance unit with a planar light entrance surface for each branch. The three planar light entrance surfaces are arranged adjacent to each other. A single light source is thus sufficient for providing light to the branches.

DE 10 2008 061716 A1 discloses a rear light for vehicles. The core idea of D1 is to position the light source not besides of the light guide, but behind the light guide to thereby increase the light emitting surface of the light guide to the boundary defined by the housing. DE 10 2008 061716 A1 discloses a particular embodiment of a light with a light source facing a light entry surface of a light guide with two branches. The light entry surface has two lenses each being part of the respective branch of the light guide. US 2004/012976A1 discloses a rear light for vehicles. Light from a LED enters a cylindrical light guide via a single convex lens for forming a single collimated light beam propagating towards a ring like light exit surface and a light exit lens being centred in said ring.

### Summary of the invention

The problem to be solved by the invention is to provide a more flexible way of feeding light to branches of a light guide.

Solutions of the problem are described in the independent claims. The dependent claims relate to further improvements of the invention.

The light comprises at least one light source and at least one light guide. The light guide has at least one slab like section branching at at least one junction in at least a first branch and a second branch. The junction may for example resemble to a Y-junction. The light guide has at least one light entrance surface facing the light source. Light from the light source can be coupled into the slab like section of the light guide via the light entrance surface and propagate through the slab like section of the light guide towards the junction and subsequently through the branches. The light entrance surface comprises at least one first lens configured to form a first collimated light beam propagating from the first lens towards the first branch and one second lens configured to form a second collimated light beam propagating from the second lens towards the second branch. Collimated light is light whose rays are at least almost parallel. Thus, the light, entering the light input surface of the slab like section is rendered at least almost parallel by each of the lenses and forms thus at least two collimated beams. In fact each of the beams is a light cone with a small aperture angle. The optical axes of the beams may direct in different directions. Thus, the light may propagate in two different directions through the slab like section of the light guide. This permits to define the amount of light entering each of the branches, as each of the beams may be directed towards a different area of the junction. In the example of a Y-junction one beam may be directed towards a left branch of the Y-junction and the other beam towards a right branch of the Y-junction. Of course, the beams may be reflected by the lateral surface of the light guide. Such reflections changes the direction of propagation, but the new direction can be calculated and thus considered by the design of the lenses, the slab like section and the junction.

At least one of the branches may have an out coupling surface, for example a rippled surface for coupling light out of the respective branch. This permits to use the branch as lighting element. For example an ambient ring of a light may be formed by one or more branches, as explained in more detail below.

The light guide is preferably configured to enhance collimation of at least one of the first and second beams. This may be obtained for example by at least one leg of the light guide with an increasing cross section. The wording 'leg' is to be understood a synonym for 'section'. For example may the leg be the slab like section or a part of it. In this case the diameter of the slab like section would increase from the entrance surface towards the junction. Enhancing the collimation, this means reducing the aperture angle and permits to better define the area of the junction the respective beam will propagate through.

The light may comprise a support to which the light guide is attached. Such attachment can be obtained by at least one protrusion extending from the light guide, which may engage with the support and preferably space light guiding elements of the light guide, like the slab like section, the junction and/or branches of the light guide, from the support. Thereby the amount of light being totally reflected when propagating in the light guide is enhanced.

The at least one protrusion is preferably positions at a shaded area of the light guide. This permits to avoid or at least reduce losses of intensity due to the protrusions. For example, a protrusion may be positioned at the inner part of a curved or bent section of the light guide or just behind the respective section; where 'behind' relates to the direction of propagation.

In a preferred embodiment, the first and second branches are ring segments of an ambient ring of the light. Each end of the branches may be optically connected with a junction, e.g. a Y-junction. Light may be coupled via each of the junctions into branches and thereby the branches may emit the light more homogeneously.

In case the light has a support for supporting the light guide it is preferred if the support has at least one surface area being reflective and being spaced from at least a part of the light guide. Thereby the effect of the lighted branches can be enhanced.

### Description of Drawings

In the following the invention will be described by way of example, without limitation of the general inventive concept, on examples of embodiments with reference to the drawings.
Figure 1 shows an exploded view of a LED light.
Figure 2 shows a light guide of the LED light.
Figure 3 shows the light guide of the LED light and a support.
Figure 4 shows a detail of the light guide.
Figure 5 v shows further detail of the light guide.
Figure 6 shows a further detail of the light guide.
Figure 7 shows a further detail of the light guide.
Figure 8 shows a further detail of the light guide.

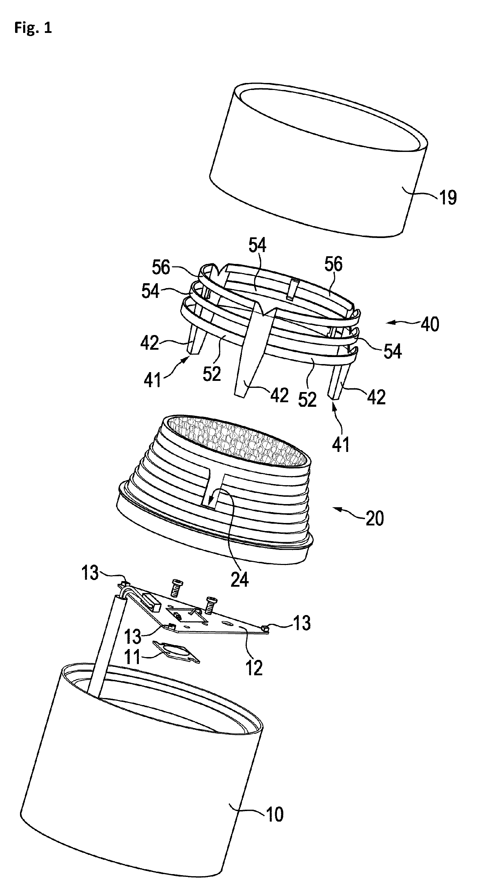

Figure 1 shows an exploded view of a LED light 1. The LED light 1 has a housing body 10 supporting a primary LED 11 and a printed circuit board 12. The primary LED 11 has a carrier which is mounted in a surface to surface connection directly to the housing body 10. The housing body 10 may thus drain of heat produced by the LED and thus is as well a heat sink for the LED. The printed circuit board 12 contacts the LED 11 and is as usually connected to some power supply (not shown). The printed circuit board supports secondary LEDs 13 for providing light to the light guide, as explained further below. A support 20 can be mounted to the housing body 10 and supports a light guide 40. An inside area of the support 20 is configured as reflector 22 for light from the primary LED 11. The primary LED 11 is positioned between the housing body 10 and a reflector entrance. A transparent cover 19 closes the housing body.

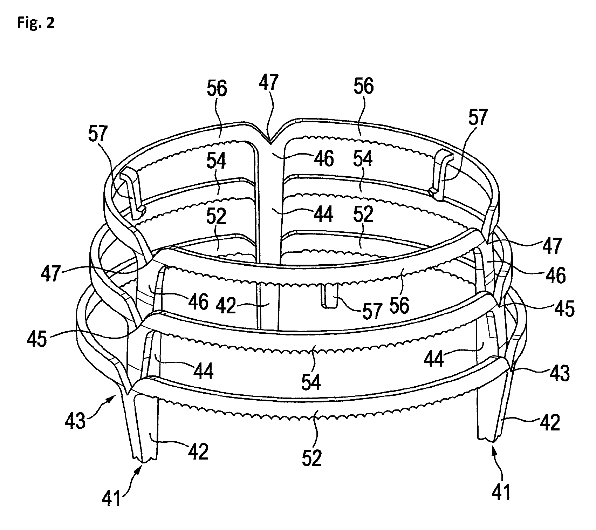

Figure 2 shows an isometric view of the light guide. The light guide 40 has slab like sections 42 each having a light entrance surface 41. The slab like sections 42 each branch at junctions 43 into branches 52 and a further slab like section 44. The further slab like sections 44 branch again, at junctions 45 into branches 54 and an additional slab like section 46, which branches at a Y-junction 47 into additional branches 56. The light guide 10 appears as having three stacked ambient rings formed by branches 52, 54 and 56, respectively. The branches 52, 54 and56 have two ends, being coupled to the respective junctions 43, 45, 47. Thus light is coupled into the branches 52, 54 and 56 from both of their ends. The branches 52, 54 and 56 have ripples at their housing body 10 facing side for coupling out light through their substantially even front surface opposite the rippled surface.

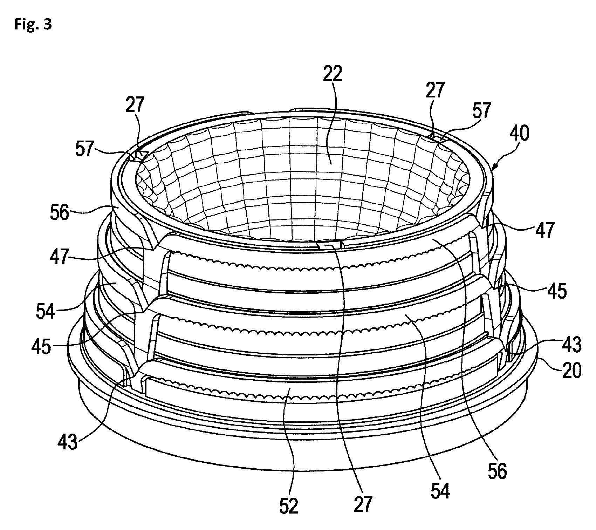

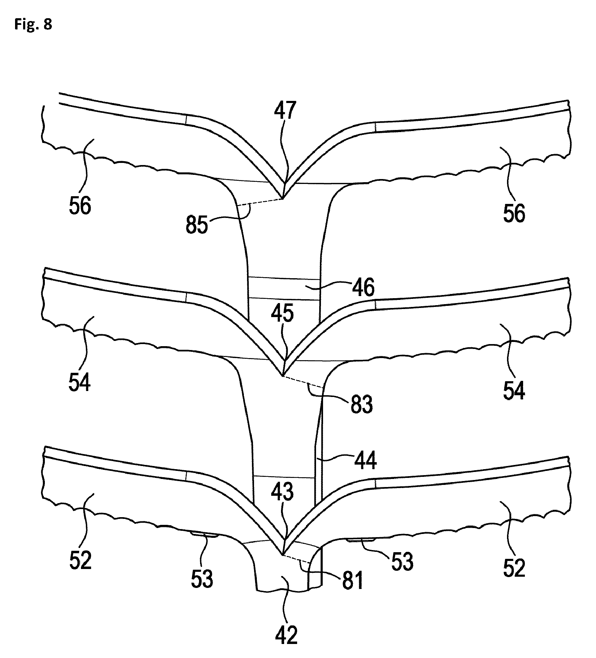

Figure 3 shows an isometric view of the light guide 40 mounted to the support 20. The slab like sections 42 extend through openings 24 of the support, such that their light entrance surfaces 41 face the secondary LEDs 13 on the printed circuit board 12 between the housing body 10 and the support 20 (see as well Fig. 1). The branches 52, 54 and 56 and as well the slab-like sections 42, 44, 46 are spaced from the support 20 by protrusions 53 (see Fig. 8). The protrusions may engage in recesses of the support 20. In addition may the light guide 40 comprise at least one mounting element 57 (see Fig. 2), which engages in complementary recess 27 of the support 20. The mounting elements 57 are positioned at the inner side of the curved branches (56) and extend orthogonally from the branches 56. The amount of light, being coupled into the mounting elements 57 is thus small. In addition, the mounting elements 57 are at least approximately in the middle between the two ends of the branches. As light is coupled in the braches from both of their ends, is the middle of the branches the region with the lowest average intensity. Thus, only a small amount of light could couple into the mounting elements.

At least a part of the surface of the support 20 may be reflective, for enhancing the effect of the ambient rings being formed by the branches 52, 54, 56. For example, at least a part of the support 20 may have a reflective coating.

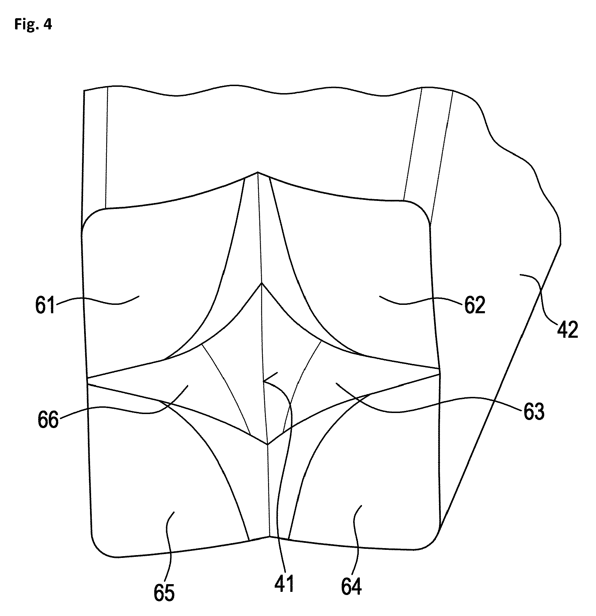

Figure 4 shows a light entry surface 41 of one of the slab like sections 42. The light entry surface 41 has six curved segments as lenses 61, 62, 63, 64, 65, 66.

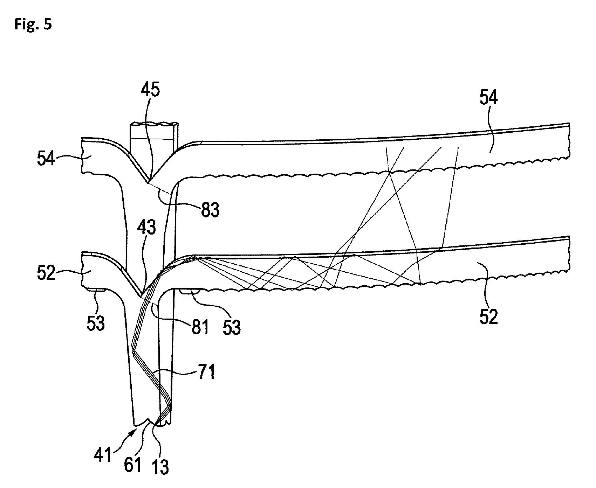

Fig. 5 shows an enlarged view of one of the slab like sections 42, the respective junction 43 and branches 52. A part of the light emitted by at least one the secondary LEDs 13 enters the light guide via lens 62 and is shown as lines 71, representing rays. The lens 62 collimates the light 71. This means the light rays 71 are at least almost parallel and thus have defined direction. The light rays 71 form a light cone or beam with a small aperture angle. This permits to direct the light 71 towards an entrance area 81 of junction 43 such that the light 71 enters the right hand branch 52 branching of at junction 43. Thus the amount of light, feed to this particular branch is well known and depends mostly on the amount of light feed to the lens 62 of the light entrance surface 41. As explained above, the light guide 40 is attached to the support 20 by protrusions like 53 and mounting elements 57. The protrusions 53 are positioned at a shaded area of the light guide. In the particular example of Fig. 5 the protrusions 53 are positioned immediately after (relating to the direction of the light) a section in which the light guide forms a curve on the side facing towards the curve center, or in other words on the inner side of the curve. In such areas is the flux density of the light small, thus only a small amount of light is coupled out via the protrusions 53. The mounting elements 57 are preferably as well positioned at shaded areas of the light guide.

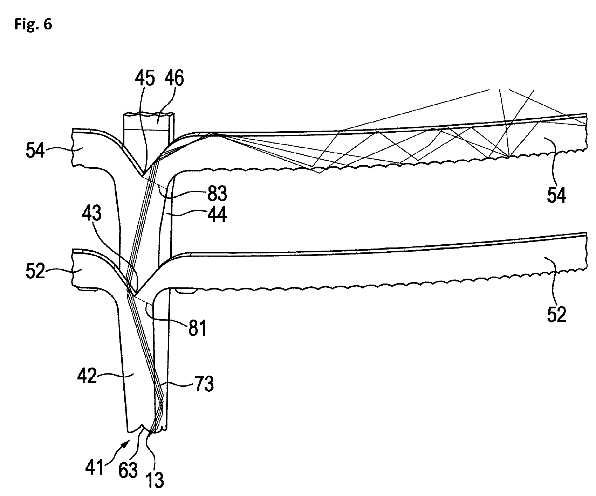

The other branches 52, 54 and 56 are provided with light in a similar way. Figure 6 shows an enlarged view of one of the slab like sections 42, 44, the respective junctions 43, 45 and branches 52, 54. A second part of the light from one of the secondary LEDs 13, which is symbolized by rays 73, enters the light entrance surface 41 via lens 63 and is at least almost collimated and directed towards an entrance area 83 of junction 43, such that the light 73 enters the right hand branch 54 branching of junction 45.

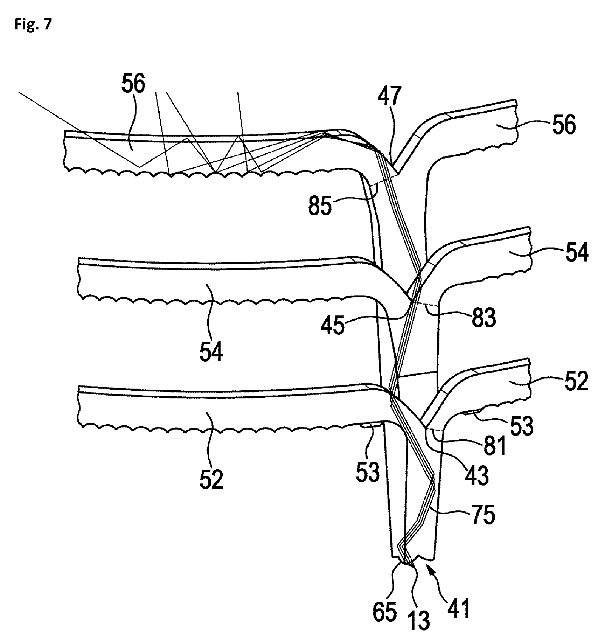

Figure 7 shows a further enlarged view of the light guide 40. A further part of the light emitted by one of the LEDs 13 enters the light guide via lens 65 and is symbolized by rays 75. The part 75 is as well at least almost collimated by the lens 65 and directed via the slab like sections 42, 44 and 46 to an area 85 of the Y-junction 47, from which the light is guides into branch 56, branching of at the left hand side of Y-junction.

Figure 8 provides a detailed view of a light guide 40. The light guide 40 has protrusions like 53, engaging with the support, as indicated in Fig. 3. The protrusions are preferably in a shaded area of the light guide. Shaded means here that almost no light fed to the one of the light entrance surfaces 41 is reflected by the shaded area, even if there would be no protrusion, as the protrusion 53 may cause light to leave the light guide 40 at an unwanted place or in an unwanted direction. As can as well be seen in Fig. 8, is that diameter and thereby the cross section of the slab like sections 42, 44 and 46 increases continuously in the direction of propagation. This enhances parallelism of the light 71, 73, 75 and at the same time molding of the light guide 40 is made easier, as the light guide can be removed more easily from the mold.

### List of reference numerals

- 10: housing body
- 11: primary LED (light emitting diode)
- 12: printed circuit board
- 13: secondary LEDs (light emitting diodes)
- 19: housing cover
- 20: support
- 22: reflector
- 24: opening
- 27: recess for mounting element
- 40: light guide
- 41: narrow side /light entrance surface
- 42: slab like section of light guide 40
- 43: junction
- 44: slab like section of light guide 40
- 45: junction
- 46: slab like section of light guide 40
- 47: junction
- 52: branch
- 53: protrusion
- 54: branch
- 56: branch
- 57: mounting element
- 61: lens
- 62: lens
- 63: lens
- 64: lens
- 65: lens
- 66: lens
- 71: light
- 73: light
- 75: light
- 81: area of junction 43
- 83: area of junction 45
- 85: area of junction 47

## Claims

1. Light (1), comprising at least one light source (13) and at least one light guide (40), with
- at least one slab like section (42) branching at at least one junction (43, 45, 47) in at least a first branch (52, 54, 56) and a second branch (52, 54, 56),
- at least one light entrance surface (41) facing towards the light source (13) for coupling light from the light source (13) into the slab like section (42),
wherein the light entrance surface (41) comprises at least
- one first lens (61, 62, 63, 64, 65, 66) configured to form a first collimated light beam (71, 73, 75) propagating from the first lens (61, 62, 63, 64, 65, 66) through said slab like section towards the first branch (52) and
- one second lens (61, 62, 63, 64, 65, 66) configured to form a second collimated light beam (71, 73, 75) propagating through said slab like section from the second lens (61, 62, 63, 64, 65, 66) towards the second branch,
wherein said first and second lenses are configured to form the first and second collimated beams (71, 73, 75) to have optical axes directing in different directions and that said first and second collimated light beams (71, 73, 75) propagate in two different directions through said slab like section of the light guide, thereby defining the amount of light entering each of the branches (52, 54, 56).

2. The light of claim 1,
**characterized in that**
the light guide (40) is configured to enhance collimation of at least one of the first and second beams (71, 73, 75), by having at least one leg (42) with a cross section that increases in the direction of propagation.

3. The light of claim 2,
**characterized in that**
the leg (42) is between the entrance surface (41) and the junction (43).

4. The light of one of claims 1 to 3,
**characterized in that**
at least one of the first and second branches (52, 54, 56) is curved and has at least one protrusion (53) for attaching the light guide (40) to a support (20), wherein the protrusion (53) is positioned in a shaded area of the light guide (40).

5. The light of one of claims 1 to 4,
**characterized in that**
the first and second branches (52, 54, 56) are ring segments of an ambient ring of the light (1).

6. Method for providing light via a slab like section (42) of a light guide (40) branching at a junction (43, 45,47) into at least a first branch (52, 54, 56) and a second branch (52, 54, 56), comprising at least the following steps:
a. providing light to a light entrance surface(41) of the slab like section (42),
b. forming a first collimated light beam (71) in the slab like section (42) by a first lens (61) of the light entrance surface (41),
c. forming a second collimated light beam (73) in the slab like section (42) by a second lens(63s) of the light entrance surface (41),
d. directing the first light beam (71) towards a first area (81) of the junction (43), and
e. directing the second light beam (73) towards a second area of the junction (43).

## Patentansprüche

1. Licht (1), umfassend zumindest eine Lichtquelle (13) und zumindest einen Lichtleiter (40), mit
- zumindest einem plattenartigen Abschnitt (42), welcher sich an zumindest einer Verbindungsstelle (43, 45, 47) in zumindest einen ersten Zweig (52, 54, 56) und einen zweiten Zweig (52, 54, 56) verzweigt,
- zumindest eine der Lichtquelle (13) zugewandte Lichteintrittsfläche (41) zum Einkoppeln von Licht von der Lichtquelle (13) in den plattenartigen Abschnitt (42),
wobei die Lichteintrittsfläche (41) zumindest aufweist
- eine erste Linse (61, 62, 63, 64, 65, 66), die konfiguriert ist, um ein erstes parallelisiertes Lichtstrahlenbündel (71, 73, 75) zu bilden, welches sich von der ersten Linse (61, 62, 63, 64, 65, 66) durch den plattenartigen Abschnitt in Richtung der ersten Verzweigung (52) ausbreitet, und
- eine zweite Linse (61, 62, 63, 64, 65, 66), die konfiguriert ist, um ein zweites parallelisiertes Lichtstrahlenbündel (71, 73, 75) zu bilden, welches sich durch den plattenartigen Abschnitt von der zweiten Linse (61, 62, 63, 64, 65, 66) in Richtung der zweiten Verzweigung ausbreitet,
wobei die ersten und zweiten Linsen konfiguriert sind, um erste und zweite parallelisierte Lichtstrahlenbündel (71, 73, 75) so zu bilden, dass sie optische Achsen haben, die in verschiedene Richtungen weisen und dass die ersten und zweiten parallelisierten Lichtstrahlenbündel (71, 73, 75) sich in zwei verschiedene Richtungen durch den plattenartigen Abschnitt des Lichtleiters ausbreiten, und dadurch die Lichtmenge definieren, die in jede der Verzweigungen eintritt (52, 54, 56).

2. Licht (1) nach Anspruch 1,
**dadurch gekennzeichnet, dass**
der Lichtleiter (40) konfiguriert ist, um die Bündelung von zumindest einem von den ersten und zweiten Strahlen (71, 73, 75) zu verbessern, indem er zumindest einen Schenkel (42) mit einem Querschnitt hat, der sich in Richtung der Ausbreitung vergrößert.

3. Licht nach Anspruch 2,
**dadurch gekennzeichnet, dass**
der Schenkel (42) sich zwischen der Eintrittsfläche (41) und der Verbindungsstelle (43) befindet.

4. Licht nach einem der Ansprüche 1 bis 3,
**dadurch gekennzeichnet, dass**
zumindest eine der ersten und zweiten Verzweigungen (52, 54, 56) gekrümmt ist und zumindest einen Vorsprung (53) hat, um den Lichtleiter (40) an einem Träger (20) zu befestigen, wobei der Vorsprung (53) in einem beschatteten Bereich des Lichtleiters (40) angeordnet ist.

5. Licht nach einem der Ansprüche 1 bis 4,
**dadurch gekennzeichnet, dass**
die ersten und zweiten Verzweigungen (52, 54, 56) Ringsegmente eines Umgebungsrings des Lichtes (1) sind.

6. Verfahren zur Bereitstellung von Licht über einen plattenartigen Abschnitt (42) eines Lichtleiters (40), welcher sich an einer Verbindungsstelle (43, 45, 47) in zumindest einen ersten Zweig (52, 54, 56) und einen zweiten Zweig (52, 54, 56) verzweigt, umfassend zumindest die folgenden Schritte:
a. Bereitstellen von Licht an eine Lichteintrittsfläche (41) des plattenartigen Abschnittes (42),
b. Bilden eines ersten parallelisierten Lichtstrahlenbündels (71) in dem plattenartigen Abschnitt (42) durch eine erste Linse (61) der Lichteintrittsfläche (41),
c. Bilden eines zweiten parallelisierten Lichtstrahlenbündels (73) in dem plattenartigen Abschnitt (42) durch eine zweite Linse (63s) der Lichteintrittsfläche (41),
d. Richten des ersten Lichtstrahls (71) hin zu einem ersten Bereich (81) der Verbindungsstelle (43), und
e. Richten des zweiten Lichtstrahls (73) hin zu einem zweiten Bereich der Verbindungsstelle (43).

## Revendications

1. Une lumière (1), comprenant au moins une source de lumière (13) et au moins un guide de lumière (40), avec
- au moins une section en forme de dalle (42) se raccordant à au moins une jonction (43, 45, 47) dans au moins une première branche (52, 54, 56) et une deuxième branche (52, 54, 56),
- au moins une surface d'entrée de lumière (41) faisant face à la source de lumière (13) pour raccorder la lumière depuis la source de lumière (13) dans la section en forme de dalle (42),
Où la surface d'entrée de lumière (41) comprend au moins
- une première lentille (61, 62, 63, 64, 65, 66) configurée pour former un premier faisceau de lumière collimaté (71, 73, 75) se propageant à partir de la première lentille (61, 62, 63, 64, 65, 66) au travers de ladite section en forme de dalle vers la première branche (52) et
- une deuxième lentille (61, 62, 63, 64, 65, 66) configurée pour former un deuxième faisceau de lumière collimaté (71, 73, 75) se propageant au travers de ladite section en forme de dalle à partir de la deuxième lentille (61, 62, 63, 64, 65, 66) vers la deuxième branche,
Où lesdites première et deuxième lentilles sont configurées pour former les premiers et deuxièmes faisceaux collimatés (71, 73, 75) pour avoir des axes optiques se dirigeant dans différentes directions et que lesdits premiers et deuxièmes faisceaux de lumière collimatés (71, 73, 75) se propagent dans deux directions différentes au travers de ladite section en forme de dalle du guide de lumière, définissant par conséquent la quantité de lumière pénétrant dans chacune des branches (52, 54, 56).

2. La lumière de la revendication 1,
**Caractérisée en ce que**
Le guide de lumière (40) est configuré pour améliorer la collimation d'au moins un des premiers et deuxièmes faisceaux (71, 73, 75), en ayant au moins un côté (42) avec une section transversale qui augmente dans le sens de propagation.

3. La lumière de la revendication 2,
**Caractérisée en ce que**
La côté (42) est entre la surface d'entrée (41) et la jonction (43).

4. La lumière de l'une des revendications 1 à 3,
**Caractérisée en ce que**
Au moins une des premières et deuxièmes branches (52, 54, 56) est incurvée et possède au moins une saillie (53) pour fixer le guide de lumière (40) à un support (20), où la saillie (53) est positionnée dans une zone ombrée du guide de lumière (40).

5. La lumière de l'une des revendications 1 à 4,
**Caractérisée en ce que**
La première et la deuxième branches (52, 54, 56) sont des segments d'anneau d'un anneau ambiante de la lumière (1).

6. Méthode pour fournir de la lumière via une section en forme de dalle (42) d'un guide de lumière (40) se branchant à une jonction (43, 45, 47) dans au moins une première branche (52, 54, 56) et une deuxième branche (52, 54, 56) comprenant au moins les étapes suivantes :
a. apport de lumière à une surface d'entrée de lumière (41) de la section en forme de dalle (42),
b. formation d'un premier faisceau de lumière collimaté (71) dans la section en forme de dalle (42) par une première lentille (61) de la surface d'entrée de lumière (41),
c. formation d'un deuxième faisceau de lumière collimaté (73) dans la section en forme de dalle (42) par une deuxième lentille (63s) de la surface d'entrée de lumière (41),
d. direction du premier faisceau de lumière (71) vers une première zone (81) de la jonction (43), et
e. direction du deuxième faisceau de lumière (73) vers une deuxième zone de la jonction (43).
